# EUROPEAN PATENT SPECIFICATION

(11) **EP 2 557 365 B1**
(45) Date of publication and mention of the grant of the patent: **27.05.2015**
(21) Application number: 11006524.0
(22) Date of filing: 09.08.2011
(51) Int. Cl.: F24D 19/10

(54) **Fluid distribution control system**
Fluidverteilungssteuersystem
Système de contrôle de distribution de fluide

(43) Date of publication of application: 13.02.2013
(73) Proprietor: Danfoss A/S, 6430 Nordborg (DK)
(72) Inventor: Bjerggaard, Niels, 8370 Hadsten (DK)
(74) Representative: Knoblauch, Andreas

(56) References cited:
- EP-A1- 0 911 714
- EP-A2- 0 677 708
- EP-A2- 0 903 543
- EP-A2- 1 207 357
- WO-A1-2007/145559
- DE-A1-102006 053 200
- US-A1- 2010 147 394

## Description

The invention relates to a fluid distribution control system having at least two temperature control circuits wherein a pressure regulating unit providing a constant pressure difference over the circuits is disposed in each circuit.

Fluid distribution control systems are typically used as floor heating systems. A hot fluid like heated water is guided through the circuits. The circuits are typically formed by pipes arranged in a floor, ceiling or wall of a building. The circuits typically comprise a heat carrier conduit having a supply line and a return line. The fluid circulates in the circuits by means of a pump.

WO 2010/095093 A2 relates to a heating or cooling system comprising several circuits. A fluid is distributed in the circuits by means of a supply manifold and returns to a return manifold. The supply manifold and the return manifold are connected by a main pipe comprising a pump. Actuators are arranged in at least one of the manifolds. The actuators control the flow rate in the circuits. To prevent the pump from overpressure, at least one of the actuators is kept always open.

The fluid distribution control system can be used as a floor temperature control system. Floor temperature control systems are very popular. Heat or coldness is distributed very homogeneous from the floor into the room. Such a system also works with a wall or a ceiling, but for reasons of simplicity the system is described only in connection with floors. The invention is generally applicable to control the temperature of rooms by means of circuits, in which a temperature controlled fluid flows. In the following the term "heat output" is used synonymously with "coldness output".

In many cases it is difficult to bring several circuits of a building in agreement with each other. A small room needs only a short circuit since only a small amount of heat is needed. Larger rooms need longer circuits to achieve a uniform temperature distribution. Therefore a flow resistance in small rooms is less than in larger rooms. The amount of fluid in the circuits corresponds to the respective flow resistance. So the amount of fluid in the small rooms is considerably higher than in the larger rooms. This is contrary to the goal, to achieve a uniform flow and heat distribution in all rooms. A uniform heat distribution ensures a good comfort. Additionally, a bad distribution has the effect that energy losses occur.

It is known to install flow control or metering valves in each circuit to influence the flow resistance. These valves are adjusted during the installation of the floor temperature control system such, that the desired flow distribution in the circuits is achieved. However, the process of adjusting the metering valves is difficult and prone to errors.

DE 10 2006 052 124 A1 discloses an equalization system for a flow temperature control arrangement having at least two temperature control circuits. For simplifying the distribution of a heat output among individual circuits, a temperature controlled actuator is disposed in each circuit. These actuators provide the same outlet temperature in all circuits and accordingly an automatic flow control.

EP 0 677 708 A2 discloses the preamble of claim 1 and shows a heating system comprising a plurality of heaters. In front of the inlet of each heater one of a plurality of pressure regulating units is arranged. The heaters are arranged in sets of conduits.

US 2010/0147394 A1 disclose a heating network comprising a plurality of pressure regulating units. Each pressure regulating unit adjusts the flow rate in a circuit comprising a plurality of heaters.

EP 0 911 714 A1 discloses a flow control valve comprising a pressure regulating unit. The flow control valve can be used in a heating system to regulate the pressure difference.

One of the disadvantages of this construction is that the whole system is controlled on the basis of the temperature in the return line. If a higher floor temperature is desired, the inlet temperature can be increased. But it is still necessary to wait until the set temperature in the return line has been reduced. This gives an imbalance in the floor temperature and a reduced comfort.

It is an object of the invention, to provide a fluid distribution control system which is easy to regulate.

This object is achieved by a fluid distribution control system comprising the features of claim 1.

The pressure regulating units keep a pressure difference over the circuits at a constant level, irrespective of the length of the circuit. The term circuit means both pipes and valve. In other words, each pressure regulating unit provides an automatic balancing. This regulation is independent from a temperature of the fluid. Therefore it does not influence individual temperature regulation. Since the pressure drops in the circuits are equalized, fluid speed in the circuits will be almost the same. So the fluid and heat distribution is made uniform and the amount of flow is used effectively.

Preferably the circuits are connected to at least one common supply manifold and at least one common return manifold. The use of a common supply manifold and a common return manifold simplifies the distribution and the junction of the fluid in the circuits.

Preferentially the pressure regulating units are arranged in at least one of the manifolds, in particular in the return manifold. In a manifold, there is enough room available to accommodate the pressure regulating units. An access to the manifolds is normally possible without problems, since they are not arranged in a floor or ceiling. So an access to the units placed in the manifold is easy in the same way. Therefore, a common maintenance of the units is possible. Another advantage is that the manifold with the units can be easily pre-manufactured. For implementing it is only necessary to install the manifold and to connect the manifold with the circuits. The fluid distribution control system is then automatically balanced and ready to use.

Preferably at least one of the manifolds comprises couplings for connection with the circuits and each coupling comprises one of the pressure regulating units. A customization of the manifold itself is not necessary since the pressure regulation units are placed in the couplings. Additionally, an easy upgrade of existing systems is possible. In case of a defect at one of the pressure regulating units they can be substituted simply by replacing the coupling.

Advantageously the fluid distribution control system comprises actuators for controlling a flow of fluid in each circuit individually. By means of the actuators, for example on/off valves, the amount of flow and therewith the heat output in each circuit can be adjusted individually. To achieve a higher heat output, open times of the actuator can be increased. In this way an individual temperature regulation in each room of a house can be obtained.

Preferably the actuators are arranged at the same manifold as the pressure regulating units. So all functional elements are arranged centrally in one manifold. It is no problem to provide an access to this manifold and therefore to the actuators and the pressure regulating units. Maintenance and installation of the system is therefore very comfortable.

Preferably all pressure regulating units are set to the same pressure difference, which is higher than the largest pressure drop in the circuits. In this way it is ensured, that the fluid distribution is uniform in all circuits. It is sufficient, that the set pressure difference is slightly higher than the biggest pressure drop in the circuits. The influence of the pressure regulating unit in the circuit having the biggest pressure drop is the smallest and in the circuit having the smallest pressure drop is the biggest. This balancing happens automatically.

It is preferred, that the pressure regulating unit comprises a non-linear characteristic. An increasing differential pressure causes "overclosing" of the pressure regulating unit. In this way it is possible to obtain a smaller fluid speed in the smallest circuit than in the largest circuit. This results in a better comfort.

Preferably each pressure regulating unit comprises a pressure regulating valve having a valve element, a valve seat and a spring acting on the valve element in opening direction. A pressure in the manifold or at an outlet of the circuit acts in a closing direction of the valve element. This pressure can be in a space between the pressure regulating unit and the actuator. This provides a simple possibility to adjust the pressure difference over each circuit. A small pressure drop in the circuit leads to a high pressure on the valve element in the closing direction and therefore to an increasing closure of the valve element. This provides an increasing flow resistance in the pressure regulating unit. A big pressure difference in the circuit leads to a small force on the valve element in the closing direction. Therefore the influence of the pressure regulating unit is small in this circuit. Considering the inlet pressure, which is a pressure at the inlet of the circuit or at the supply manifold, would have the advantage, that the system is independent of the status of the actuators in the other circuits. The flow speed and accordingly the heat output remains constant.

It is preferred, that the valve element comprises a channel connecting a chamber at an outer side of a pressure regulating member with a space in the manifold. The pressure regulating member is fixed at the valve element. Because of the channel a pressure in the chamber acting in opening direction is then equal to or slightly less than the pressure in the space. The space is arranged in flow direction behind the pressure regulating units. Normally this space is arranged between the pressure regulating unit and an actuator.

Preferably a product of an inlet pressure multiplied by its active areas has majority in relation to the product of an outlet pressure multiplied by its active areas. The inlet pressure is a pressure in front of the pressure regulating unit and the outlet pressure is a pressure behind the pressure regulating unit, shown in flow direction. The active areas are areas, which are part of the valve element or the pressure regulating member, so that a pressure acting on this areas influences the position of the valve element in respect to the valve seat. If the product of the inlet pressure and its active areas has majority over the product of the outlet pressure and its active areas, it is ensured that the pressure regulating unit will close and the fluid flow will be reduced, when the majority exceeds the force of a spring acting in opening direction.

Some embodiments of the invention are described with reference to the attached drawings, in which:
- Fig. 1: is a schematic representation of a fluid distribution control system,
- Fig. 2: is a section of a manifold comprising a coupling and a pressure regulating unit,
- Fig. 3: is a detail of Fig. 2, and
- Fig. 4: shows the pressure regulating unit in detail.

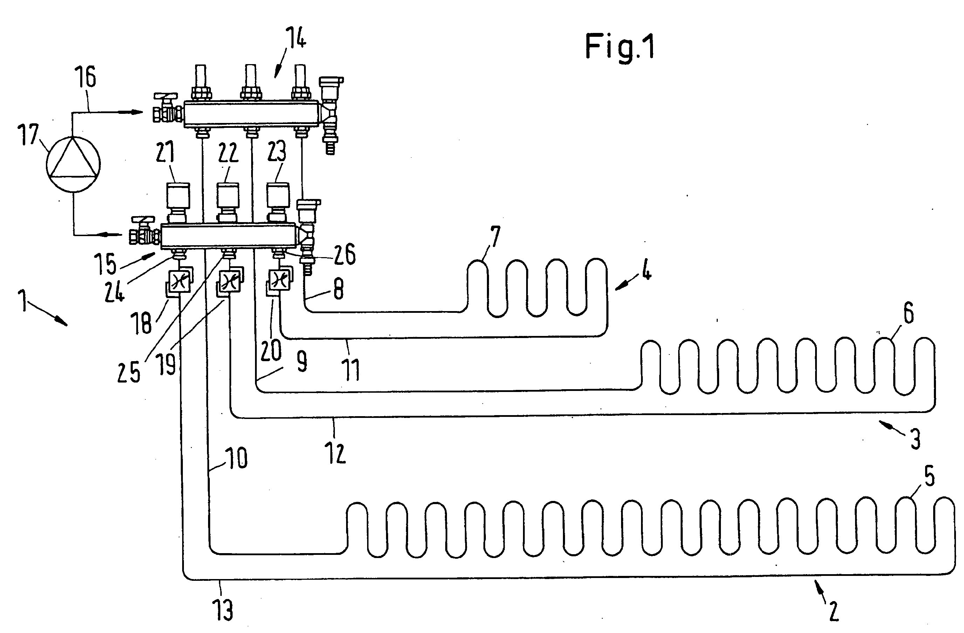

Fig. 1 shows a schematic representation of a fluid distribution control system 1 comprising three temperature control circuits 2, 3, 4. Each circuit 2, 3, 4 comprises a heat carrier conduit 5, 6, 7 installed in a floor, ceiling or wall, a supply line 8, 9, 10 and a return line 11, 12, 13.

The supply lines 8, 9, 10 are connected to a supply manifold 14 and the return lines 11, 12, 13 are connected to a return manifold 15. The manifolds 14, 15 are connected by means of a main pipe 16 having a heat pump 17 for circulating a fluid through the circuits 2, 3, 4.

A pressure regulating unit 18, 19, 20 is arranged in each return line 11, 12, 13 of each circuit 2, 3, 4. The pressure regulating units 18, 19, 20 each keep a pressure difference over the circuits 2, 3, 4, respectively, at a constant level irrespective of the length and flow resistance of the circuits 2, 3, 4. In this way a homogeneous distribution of the fluid in the circuits 2, 3, 4 is achieved.

Actuators 21, 22, 23 are arranged at the return manifold 15. The actuators 21, 22, 23 control the flow of fluid in the circuits 2, 3, 4. A control unit for controlling the actuators 21, 22, 23 is not shown. The control unit could include a wireless acting system with a thermostat in each room that measures the actual room temperature. These thermostats can be set at a desired room temperature, and if the measured and set temperature do not match, the valve concerned is opened or closed. The communication between the thermostats and the control unit concerned could take place by means of radio for example.

The actuators 21, 22, 23 can also be arranged at the supply manifold 14. Furthermore there can be actuators both in the supply manifold 14 and in the return manifold 15.

The actuators 21, 22, 23 must only provide an on/off function.

The fluid can be hot or cold water or any other suitable liquid and can comprise glycol, for example.

For example, a pressure difference between the supply manifold 14 and the return manifold 15 is 0,6 bar. The circuits 2, 3, 4 have varying lengths so different pressure drops will occur in the circuits. In the circuit 2, which is the longest circuit and therefore comprises the highest flow resistance, occurs a pressure drop of 0,5 bar. In the circuit 3 exists a pressure drop of 0,3 bar and in the circuit 4 a pressure drop of 0,1 bar.

The mentioned values are merely examples, which are only used to describe the system.

If no pressure regulating units were installed, most of the fluid would flow through the shortest circuit 4 having the lowest flow resistance and pressure difference. This would cause a bad heat distribution in the individual circuits. A high amount of flow is needed to provide enough fluid in all circuits. So normally a relative large pump is necessary.

To overcome this drawbacks, a pressure regulating unit 18, 19, 20 is arranged in each circuit 2, 3, 4. The immediate effect is that the pressure difference and thus the fluid speed in the individual circuits 2, 3, 4 will be almost the same. In other words, the pressure regulating units take care of a uniform flow distribution. They balance a uniform pressure difference of 0,6 bar over all circuits. The pressure regulating units are set to the same pressure difference, in this example 0,6 bar. Therefore, the pressure regulating unit 18 in circuit 2 produces an additional pressure drop of 0,1 bar. The unit 19 in circuit 3 produces a pressure drop of 0,3 bar and the pressure unit 20 in circuit 4 a pressure drop of 0,5 bar.

In an advantageous embodiment the pressure regulating units comprise a non-linear characteristic. In this case an increasing differential pressure causes an increasing flow resistance in the pressure regulating unit, a kind of overclosing. This has the effect, that a speed of the flow in short circuits is less than the speed in longer circuits. Finally, a better heat distribution is obtained.

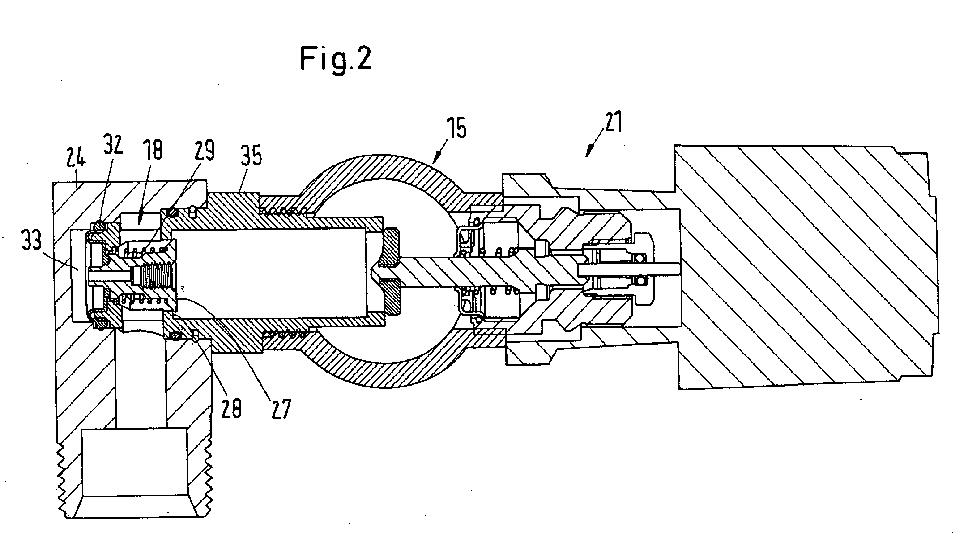

Fig. 2 shows a section through the return manifold 15 comprising the associated actuator 21 and the pressure regulating unit 18. The pressure regulating unit 18 is arranged in the coupling 24 of the return manifold 15. The manifold 15 comprises the couplings 24, 25, 26, one per each circuit 2, 3, 4. In an alternative embodiment the pressure regulating unit is integrated in the manifold.

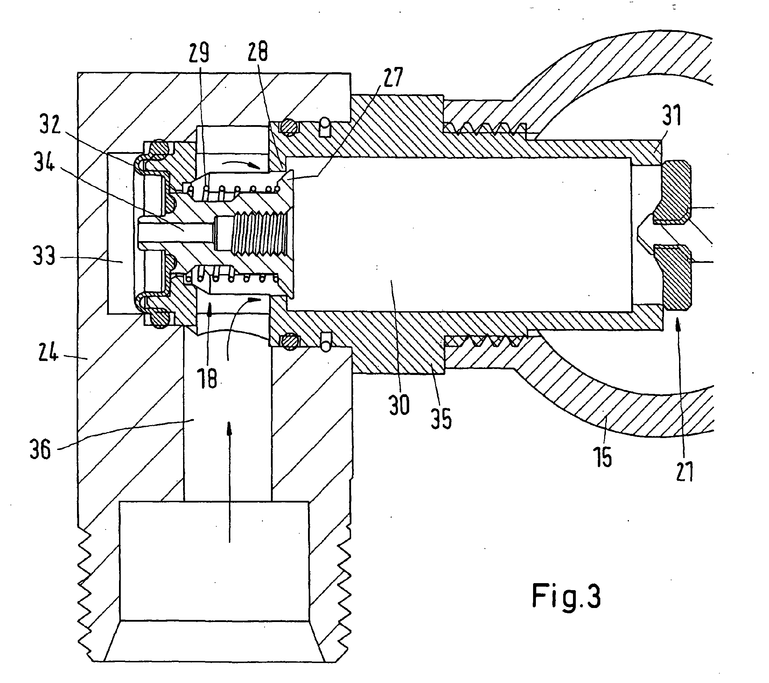

Fig. 3 shows an enlarged section of the pressure regulating unit 18. Pressure regulating unit 18 comprises a pressure regulating valve having a valve element 27 and a valve seat 28. A spring 29 acts on the valve element 27 in an opening direction. A pressure of the fluid in a space 30 placed in a flow direction behind the pressure regulating unit 18 acts in a closing direction. The space 30 is formed in an insert 35, which connects the coupling 24 with the manifold 15 and which forms a valve seat 31 for the actuator 21.

The pressure regulating unit 18 further comprises a pressure response member 32. In this example the pressure response member 32 is a membrane, but the pressure response member 32 can also be a bellow element.

Pressure response member 32 is in contact with the valve element 27 such, that the pressure acting on an outer surface of the membrane causes a closing force to the valve element 27.

In the valve element 27 a channel 34 is formed, which connects the space 30 with a chamber 33 at the outside of the membrane. The pressure in the space 30 acts in the closing direction on the valve element 27. The pressure in the chamber 33 acts in opening direction on the valve element 27. A pressure at an inlet side 36 of the coupling 24 acts both in opening and closing direction. Between the inlet side 36 and the space 30 exists a pressure drop due to the interaction of valve element 27 and valve seat 28.

The membrane itself will typically be made of a rubber material, and the remaining components can be made of, for example, brass or plastic. The hoses do not have to enter the manifold in a vertical direction. This is only done to prevent them from taking up to much space in the room. Also a solution, where the coupling 24 is placed in extension with the manifold 15 could be imagined, which would result in a total of one housing part.

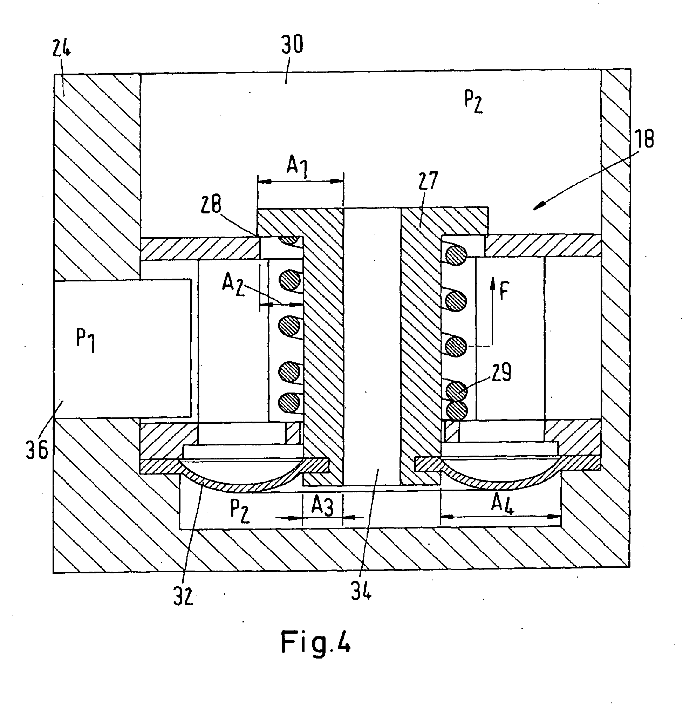

By the pressure regulating unit 18 shown in Fig. 4 the function of this unit will be described in more detail. The function of the unit is to reduce the fluid flow at increasing differential pressure over the unit. The unit can be used to balance fluid speeds in different lengths of floor heating circuits.

Over the valve seat 28 is generated a differential pressure by the external pump 17. The spring 29 will try to keep the pressure regulating unit 18 open.

The resulting force acting in opening direction at the valve element 27 is the combination of the force resulting from a inlet pressure P1 at the inlet side 36 acting on its active area A2, the force resulting from the outlet pressure P2 at the space 30 acting on its active areas A4 and A3 and the force F of the spring 29.

The resulting force acting in closing direction at the valve element 27 is the combination of the force resulting from the inlet pressure P1 acting on its active area A4 and the force resulting from the outlet pressure P2 acting on its active area A1.

This resulting forces can be described by the following functional description:
Opening force: (A2·P01)+(A4·P2)/2+(A3·P2)+F
Closing force: (A1·P2)+(A4·P1)/2

The product of the inlet pressure P1 multiplied by its active areas A2, A4 should have majority in relation to the product of the outlet pressure P2 multiplied by its active areas A1, A3, A4. The majority can be influenced by adjusting the active areas A1, A2, A3, A4.

When this majority exceeds the force of the spring 29, the pressure regulating unit 18 will close and the fluid flow will be reduced. The area adjustment and the c-value of the spring, which is the force change per mm of spring compression, will control the capacity dampening, which means the valve authority, as a function of the differential pressure.

## Claims

1. Fluid distribution control system having at least two temperature control circuits, wherein a pressure regulating unit providing a constant pressure difference over the circuits is disposed in each circuit, **characterized in that** the pressure regulating units (18, 19, 20) are set to the same pressure difference.

2. Fluid distribution control system according to claim 1, **characterized in that** the circuits (2, 3, 4) are connected to at least one common supply manifold (14) and at least one common return manifold (15).

3. Fluid distribution control system according to claim 2, **characterized in that** the pressure regulating units (18, 19, 20) are arranged in at least one of the manifolds (14, 15), in particular in the return manifold (15).

4. Fluid distribution control system according to at least one of the claims 2 or 3, **characterized in that** at least one of the manifolds (14, 15) comprises couplings (24, 25, 26) for connection with the circuits (2, 3, 4) and each coupling (24, 25, 26) comprises one of the pressure regulating units (18, 19, 20).

5. Fluid distribution control system according to at least one of the claims 1 to 4, **characterized in that** it comprises actuators (21, 22, 23) for controlling a flow of fluid in each circuit (2, 3, 4) individually.

6. Fluid distribution control system according to claim 5, **characterized in that** the actuators (21, 22, 23) are arranged at the same manifold (15) as the pressure regulating units (18, 19, 20).

7. Fluid distribution control system according to at least one of the claims 1 to 6, **characterized in that** all pressure regulating units (18, 19, 20) are set to said same pressure difference, which is higher than the biggest pressure drop in the circuits (2, 3, 4).

8. Fluid distribution control system according to at least one of the claims 1 to 7, **characterized in that** the pressure regulating unit (18, 19, 20) comprises a non-linear characteristic.

9. Fluid distribution control system according to at least one of the claims 1 to 8, **characterized in that** each pressure regulating unit (18, 19, 20) comprises a pressure regulating valve having a valve element (27), a valve seat (28) and a spring (29) acting in opening direction.

10. Fluid distribution control system according to claim 9, **characterized in that** the valve element (27) comprises a channel (34) connecting a chamber (33) at the outer side of a pressure regulating member (32) with a space (30) in the manifold (15).

11. Fluid distribution control system according to at least one of the claims 1 to 9 **characterized in that** a product of an inlet pressure (P1) multiplied by its active areas (A1, A3, A4) of the pressure regulating unit (18) has majority in relation to a product of a outlet pressure (P2) multiplied by its active areas (A1, A3, A4) of the pressure regulating unit (18).

## Patentansprüche

1. Fluidverteilungssteuersystem mit mindestens zwei Temperaturregulierkreisen, wobei in jedem Kreis eine Druckreguliereinheit, die einen konstanten Druckunterschied über die Kreise bereitstellt, angeordnet ist, **dadurch gekennzeichnet, dass** die Druckreguliereinheiten (18, 19, 20) auf denselben Druckunterschied eingestellt sind.

2. Fluidverteilungssteuersystem nach Anspruch 1, **dadurch gekennzeichnet, dass** die Kreise (2, 3, 4) zumindest mit einem gemeinsamen Zuführverteiler (14) und zumindest einem gemeinsamen Rückführverteiler (15) verbunden sind.

3. Fluidverteilungssteuersystem nach Anspruch 2, **dadurch gekennzeichnet, dass** die Druckreguliereinheiten (18) in zumindest einem der Verteiler (14, 15), insbesondere in dem Rückführverteiler (15), angeordnet sind.

4. Fluidverteilungssteuersystem nach mindestens einem der Ansprüche 2 oder 3, **dadurch gekennzeichnet, dass** mindestens einer der Verteiler (14, 15) Kupplungen (24, 25, 26) für eine Verbindung mit den Kreisen (2, 3, 4) umfasst und jede Kupplung (24, 25, 26) eine der Druckreguliereinheiten (18, 19, 20) umfasst.

5. Fluidverteilungssteuersystem nach mindestens einem der Ansprüche 1 bis 4, **dadurch gekennzeichnet, dass** es Bedienungselemente (21, 22, 23) umfasst, um einen Durchfluss des Fluids in jedem Kreis (2, 3, 4) einzeln zu steuern.

6. Fluidverteilungssteuersystem nach Anspruch 5, **dadurch gekennzeichnet, dass** die Bedienungselemente (21, 22, 23) an demselben Verteiler (15) wie die Druckreguliereinheiten (18, 19, 20) angeordnet sind.

7. Fluidverteilungssteuersystem nach mindestens einem der Ansprüche 1 bis 6, **dadurch gekennzeichnet, dass** alle Druckreguliereinheiten (18, 19, 20) auf denselben Druckunterschied eingestellt sind, der größer als der größte Druckabfall in den Kreisen (2, 3, 4) ist.

8. Fluidverteilungssteuersystem nach mindestens einem der Ansprüche 1 bis 7, **dadurch gekennzeichnet, dass** die Druckreguliereinheit (18, 19, 20) eine nichtlineare Eigenschaft umfasst.

9. Fluidverteilungssteuersystem nach mindestens einem der Ansprüche 1 bis 8, **dadurch gekennzeichnet, dass** jede Druckreguliereinheit (18, 19, 20) ein Druckregulierventil mit einem Ventilelement (27), einem Ventilsitz (28) und einer Feder (29), die in die Öffnungsrichtung wirkt, umfasst.

10. Fluidverteilungssteuersystem nach Anspruch 9, **dadurch gekennzeichnet, dass** das Ventilelement (27) einen Kanal (34) umfasst, der eine Kammer (33) an der äußeren Seite eines Druckregulierelements (32) mit einem Raum (30) in dem Verteiler (15) verbindet.

11. Fluidverteilungssteuersystem nach mindestens einem der Ansprüche 1 bis 9, **dadurch gekennzeichnet, dass** ein Produkt eines Einlassdrucks (P1) multipliziert mit den aktiven Flächen (A1, A3, A4) der Druckreguliereinheit (18) größer als ein Produkt eines Auslassdrucks (P2) multipliziert mit den aktiven Flächen (A1, A3, A4) der Druckreguliereinheit (18) ist.

## Revendications

1. Système de contrôle de distribution de fluide ayant au moins deux circuits de contrôle de température, une unité de régulation de pression fournissant une différence de pression constante entre les circuits étant disposée dans chaque circuit, **caractérisé en ce que** les unités de régulation de pression (18, 19, 20) sont réglées à la même différence de pression.

2. Système de contrôle de distribution de fluide selon la revendication 1, **caractérisé en ce que** les circuits (2, 3, 4) sont connectés à au moins un collecteur d'alimentation commun (14) et à au moins un collecteur de retour commun (15).

3. Système de contrôle de distribution de fluide selon la revendication 2, **caractérisé en ce que** les unités de régulation de pression (18, 19, 20) sont disposées dans au moins l'un des collecteurs (14, 15), en particulier dans le collecteur de retour (15).

4. Système de contrôle de distribution de fluide selon au moins l'une des revendications 2 ou 3, **caractérisé en ce qu'**au moins l'un des collecteurs (14, 15) comprend des accouplements (24, 25, 26) pour la connexion aux circuits (2, 3, 4) et chaque accouplement (24, 25, 26) comprend l'une des unités de régulation de pression (18, 19, 20).

5. Système de contrôle de distribution de fluide selon au moins l'une des revendications 1 à 4, **caractérisé en ce qu'**il comprend des actionneurs (21, 22, 23) pour contrôler individuellement un écoulement de fluide dans chaque circuit (2, 3, 4).

6. Système de contrôle de distribution de fluide selon la revendication 5, **caractérisé en ce que** les actionneurs (21, 22, 23) sont disposés au niveau du même collecteur (15) que les unités de régulation de pression (18, 19, 20).

7. Système de contrôle de distribution de fluide selon au moins l'une des revendications 1 à 6, **caractérisé en ce que** toutes les unités de régulation de pression (18, 19, 20) sont réglées à ladite même différence de pression qui est supérieure à la plus grande chute de pression dans les circuits (2, 3, 4).

8. Système de contrôle de distribution de fluide selon au moins l'une des revendications 1 à 7, **caractérisé en ce que** l'unité de régulation de pression (18, 19, 20) comprend une caractéristique non linéaire.

9. Système de contrôle de distribution de fluide selon au moins l'une des revendications 1 à 8, **caractérisé en ce que** chaque unité de régulation de pression (18, 19, 20) comprend une soupape de régulation de pression ayant un élément de soupape (27), un siège de soupape (28) et un ressort (29) agissant dans une direction d'ouverture.

10. Système de contrôle de distribution de fluide selon la revendication 9, **caractérisé en ce que** l'élément de soupape (27) comprend un canal (34) reliant une chambre (33) au niveau du côté extérieur d'un organe de régulation de pression (32) avec un espace (30) dans le collecteur (15).

11. Système de contrôle de distribution de fluide selon au moins l'une des revendications 1 à 9, **caractérisé en ce qu'**un produit d'une pression d'entrée (P1) multipliée par ses surfaces actives (A1, A3, A4) de l'unité de régulation de pression (18) est majoritaire par rapport à un produit d'une pression de sortie (P2) multipliée par ses surfaces actives (A1, A3, A4) de l'unité de régulation de pression (18).
